# EUROPÄISCHE PATENTSCHRIFT

(11) **EP 1 339 762 B1**
(45) Veröffentlichungstag und Bekanntmachung des Hinweises auf die Patenterteilung: **25.01.2006**
(21) Anmeldenummer: 01985827.3
(22) Anmeldetag: 27.11.2001
(51) Int. Cl.: C08F 10/02, C08F 2/00, B01J 8/06, B01J 19/24

(54) **VORRICHTUNG ZUR INITIATOREINSPEISUNG AN REAKTOREN**
DEVICE FOR FEEDING REACTOR INITIATORS
DISPOSITIF D'ALIMENTATION D'INITIATEUR DANS DES REACTEURS

(30) Priorität: 05.12.2000 DE 10060372
(43) Veröffentlichungstag der Anmeldung: 03.09.2003
(73) Patentinhaber: Basell Polyolefine GmbH, 50389 Wesseling (DE)
(72) Erfinder: GROOS, Georg, 67125 Dannstadt-Schauernheim (DE); MÄHLING, Frank-Olaf, 68167 Mannheim (DE); DAISS, Andreas, 68165 Mannheim (DE); LITTMANN, Dieter, 35325 Mücke (DE); EVERTZ, Kaspar, D-65843 Sulzbach/Taunus (DE)
(86) Internationale Anmeldenummer: PCT/EP2001/013788
(87) Internationale Veröffentlichungsnummer: WO 2002/048214

(56) Entgegenhaltungen:
- EP-A- 0 449 092
- WO-A-96/35506
- DE-A- 19 634 450
- DE-A- 19 829 399
- US-A- 3 405 115
- US-A- 4 238 453
- US-A- 6 096 839

## Beschreibung

Die Erfindung bezieht sich auf eine Vorrichtung zur Initiatoreinspeisung an Reaktoren wie etwa der Peroxideinspeisung für LDPE-Hochdruckreaktoren.

Polyethylen (PE) ist einer der wichtigsten Kunststoffe und weist eine hohe Beständigkeit gegen wässrige Säuren und Laugen auf. Der Kunststoff besitzt gute elektrische Eigenschaften, wie eine niedrige Dielektrizitätskonstante und einen hohen spezifischen Widerstand. Ferner vereint dieser Kunststoff in sich gute mechanische Eigenschaften, wie eine hohe Schlagzähigkeit, mit niedriger Dichte, wodurch er sich zur Anwendung in vielen technischen Bereichen eignet. So werden aus PE Folien und Gebrauchsgegenstände für Haushalt und Industrie hergestellt; ferner kommt Polyethylen bei Kabelisolierungen und Rohrummantelungen zum Einsatz. Polyethylen geringer Dichte (LDPE) weist aufgrund seines geringen kristallinen Anteils von lediglich 50 bis 70% - verglichen mit Polyethylen hoher Dichte (HDPE), bei dem der kristalline Anteil 70 bis 90% beträgt - eine hohe Durchsichtigkeit auf, was seine Verwendung als Folienwerkstoff begünstigt. Ein gängiges Verfahren zur Herstellung von Polyethylenfolien ist Kalandrieren, mit dem PolyethylenFolien von Schichtdicken im Bereich von 0,05 bis 1 mm hergestellt werden können. Beim Kalandrieren erfolgt ein Auswalzen des Thermoplasten durch eine Vielzahl von Walzenspalten bildenden Walzen, zwischen denen der Thermoplast zu einer immer dünner werdenden Folie umgeformt wird. Nach Verlassen des Kalanders wird die Folie auf Kühlwalzen abgekühlt und anschließend aufgewickelt.

Ein Verfahren zur Herstellung von LDPE ist das Rohrreaktorverfahren. Zum Start der Polymerisation werden Peroxid-Initiatoren eingesetzt, die in flüssiger Form in den Rohrreaktor eingebracht werden. Im Vergleich zur Menge des Ethylens handelt es sich beim Massenstrom des Initiators Peroxid um einen geringfügigen Massenstrom. Eine Eigenschaft des eingesetzten Initiators ist es, unter den im Rohrreaktor herrschenden Bedingungen schnell in elektronisch ungesättigte Spezies zu zerfallen. Zur Erzielung eines hohen Wirkungsgrades dieser Initiatoren - wie zum Beispiel Peroxid -, um einen hohen Umsatz zu gewährleisten, bei verbesserten Polymereigenschaften und stabilerer Reaktorbetriebsweise ist es vorteilhaft, die Reaktanten möglichst schnell miteinander zu vermischen.

Aus EP 0 980 967 ist ein Verfahren zur Herstellung von Ethylenhomo- und - copolymeren in einem Rohrreaktor bei Drücken oberhalb von 1000 bar und Temperaturen im Bereich zwischen 120 °C bis 350 °C durch radikalische Polymerisation bekannt geworden. Einem strömenden Fließmedium, welches Ethylen, Molmassenregler und gegebenenfalls Polyethylen enthält, werden zunächst geringe Mengen von Radikalkettenstarter zugeleitet, woran sich die Polymerisation anschließt. Das strömende Fließmedium wird gemäß dieser Lösung zunächst in zwei getrennt voneinander strömende Volumenelemente zerlegt, danach werden die getrennt voneinander strömenden Volumenelemente durch geeignete Strömungselemente in gegensinnige Rotation zueinander versetzt. Anschließend werden die gegensinnig rotierenden, strömenden Volumenelemente wieder zu einem strömenden Fließmedium vereinigt und im Moment oder kurz nach der Vereinigung der gegensinnig rotierenden, strömenden Volumenelemente wird der Radikalkettenstarter in den gescherten Grenzbereich zwischen den gegensinnig rotierenden strömenden Volumenelementen eingeleitet. Aus EP 0 980 967 ist zudem eine Vorrichtung zur Durchführung dieses Verfahrens bekannt. Eine Verbesserung der Vermischung des eindosierten Initiators und damit verbunden eine Verbesserung der Produktqualität konnte auch durch eine Erhöhung der Strömungsgeschwindigkeit in den Mischzonen erreicht werden.

Die Effektivität eines ausgewählten Radikalkettenstarters hängt davon ab, wie schnell er im Einzelfall mit dem vorgelegten Reaktionsmedium vermischt werden kann. Hierzu kommen in großtechnischen Anlagen bei der Herstellung von Polyethylen Einspritzfinger zum Einsatz.

EP 0 449 092 A1 beschreibt, wie über Einspritzfinger Radikalkettenstarter, auch Initiatoren genannt, Initiatorgemische oder Lösungen von Initiatoren in organischen Lösemitteln an mehreren Stellen entlang eines Reaktors eindosiert werden.

Aus US 4,135,044 bzw. US 4,175,169 ist bekannt, wie durch vergleichsweise geringeren Rohrdurchmesser in den Initiierungs- und Reaktionszonen eines Hochdruckreaktors, bezogen auf den vergrößerten Rohrdurchmesser in der Kühlzone, Produkte mit sehr guten optischen Eigenschaften in hohen Ausbeuten und bei relativ geringem Druckabfall über die Länge des Reaktors hergestellt werden konnten.

US 3,405,115 ist schließlich zu entnehmen, dass das gleichmäßige Starten der Polymerisationsreaktion und die optimale Durchmischung der Reaktionskomponenten für die Qualität des erhaltenen Polyethylens für hohe Reaktorausbeute und zur Erzielung eines gleichmäßigen Reaktorbetriebes von hoher Bedeutung ist. Hierzu werden gemäß dieser Lösung Initiatoren in einer speziellen Mischkammer mit Teilströmen von kaltem Ehylen vermischt und danach erst dem eigentlichen Reaktor zugeleitet. In der Mischkammer wird das Fluid, in dem der Initiator wegen der dort herrschenden niedrigen Temperaturen nicht zerfällt, mehrfach umgelenkt und durch Kanäle geführt.

Angesichts der skizzierten Lösungen, die aus dem Stand der Technik bekannt sind, lag der Erfindung die Aufgabe zugrunde, die Einspeisung eines Radikalkettenstarters in ein strömendes Fließmedium bezüglich einer möglichst hohen Mischgeschwindigkeit noch weiter zu optimieren.

Erfindungsgemäß wird die Aufgabe durch ein Verfahren zum Herstellen von Polyethylen in Rohrreaktoren und/oder in Kombination mit Autoklaven gelöst, bei dem einem strömenden Fließmedium, Ethylen enthaltend und ggf. Comonomere, ein Radikalkettenstarter zugeleitet wird, wobei mindestens die nachfolgend angegebenen Verfahrensschritte durchlaufen werden:
- Erzeugen eines Dralles durch Mischen zweier zu mischender Ströme unter einem Winkel oder Erzeugen von Drall im strömenden Fließmedium durch Drallelemente;
- Vorsehen einer Querschnittsverengung mit Einlaufzone vor der Einspeisestelle des Radikalkettenstarters in ein Reaktionsrohr;
- Einleiten des Radikalkettenstarters in die drallbehaftete Strömung, des Fließmediums und
- Anordnen einer nachgeschalteten Vermischungszone und einer Querschnittserweiterung mit Auslauf.

Die mit der erfindungsgemäßen Verfahrensweise erzielbaren Vorteile sind vor allem darin zu sehen, dass ein sparsamerer Umgang in Bezug auf den Eintrag des Radikalkettenstarters (Initiators) durch Steigerung der Mischeffektivität erreicht werden kann. Die Drallerzeugung im strömenden Fließmedium erhöht die Turbulenz, die per se durch Querimpulsaustausch in den zu mischenden Fluiden eine Verbesserung der Mischeffektivität nach sich zieht. Mit dem erfindungsgemäßen Verfahren lassen sich Polyethylene herstellen, die in Bezug auf die Folienherstellung, speziell auf deren Transparenz, wesentlich verbesserte optische Eigenschaften aufweisen, auf Grund geringerer hochmolekularer Anteile. Mit der erfindungsgemäßen Lösung und dem sich unverzüglich einstellenden Mischen des Polyethylen enthaltenden Fließmediums mit dem Radikalkettenstarter (Initiator) lässt sich eine wesentlich stabilere Reaktorbetriebsweise bei außergewöhnlich hohen Maximaltemperaturen ohne Zersetzungsneigung des erzeugten Endproduktes erzielen. Ferner lässt sich ein schnellerer Temperaturanstieg im Reaktor, ein besseres Tieftemperaturstartverhalten der Polymerisation bei Einsatz tief zerfallender Initiatoren erzielen. Ein weiterer Vorteil des erfindungsgemäßen Verfahrens liegt in der - verglichen mit der Halbwertszeit des Initiators - extrem kurzen Einmischzeit.

In weiterer Ausgestaltung des der Erfindung zugrundeliegenden Gedankens liegt die Einspeisestelle des Radikalkettenstarters (Initiators) stromab vom Ort der Dralleinleitung in das strömende Fließmedium. Dadurch ist sichergestellt, dass der an der Einspeisestelle in das strömende Fließmedium eingespeiste Radikalkettenstarter stets auf ein bereits im turbulenten Zustand befindliches Fließmedium trifft, so dass die Mischzeit herabgesetzt und die Mischeffektivität wesentlich verbessert ist.

Durch die Geometrie der Einspeiseöffnung am Einspeiseelement des Radikalkettenstarters in das verdrallte strömende Fließmedium lässt sich die Einspeisetiefe des Radikalkettenstarters in das strömende Fließmedium beeinflussen. Ist die Eintragsöffnung für den Radikalkettenstarter am Einspeisefinger besonders gering gewählt, lässt sich ein feiner Strahl des Radikalkettenstarters sehr tief in Bezug auf den Rohrquerschnitt in das strömende Fließmedium einspeisen. Je nach Strömungsgeschwindigkeit des Fließmediums kann über die gewählte Geometrie der Eintragsöffnung die Einspeisetiefe des Radilcallcettenstarters und damit die erzielbare Mischeffektivität positiv beeinflusst und angepasst werden.

In einer Ausführungsvariante des erfindungsgemäßen Verfahrens liegen die Einspeiserichtungen von Teilströmen des strömenden Fließmediums um einen Winkel von 90° zueinander orientiert. Damit lässt sich im resultierenden Massenstrom des strömenden Fließmediums eine tangentiale Strömungskomponente erzeugen, welche im vereinigten Massenstrom des strömenden Fließmediums einen in Umfangsrichtung verlaufenden Drall erzeugt, der für das Entstehen eines turbulenten Strömungszustandes erwünscht ist. Vor ihrer unter einem Winkel von 90° zueinander erfolgenden Zusammenführung können die Teilströme des strömenden Fließmediums jeweils Querschnittsverengungen passieren, so dass die Strömungsgeschwindigkeit je nach Verhältnis des freien zu verengtem Strömungsquerschnitt verdoppelt werden kann. Sind die Teilströme des drallbehafteten strömenden Fließmediums innerhalb des Reaktionsrohres zusammengeführt, so lässt sich durch Anordnung einer weiteren Querschnittsverengung vor der Eintragstelle des Radikalkettenstarters (Initiators) nach Passage eines Ringraumes eine weitere Erhöhung des turbulenten Strömungszustandes des zusammengeführten strömenden Fließmediums erzielen.

Die Einspeisung des Radikalkettenstarters (Initiators) an der Einspeisestelle erfolgt bevorzugt in einen Scherspalt des drallbehafteten Fließmediums, welches in Bezug auf die Position der Einspeisestelle des Radikalkettenstarters (Initiators) in Umfangsrichtung im Strömungsquerschnitt rotiert.

Eine andere Variante des Erzeugens einer drallbehafteten Strömung besteht darin, im freien Strömungsquerschnitt Drallkörper vorzusehen, welche das strömende Fließmedium passiert und durch welche das strömende Fließmedium in Umfangsrichtung im Strömungsquerschnitt in Rotation versetzt wird, so dass Scherspalte entstehen.

Die Erzeugung von Drall im strömenden Fließmedium kann einerseits derart erfolgen, dass ein Kemstrom an seiner gedachten zylindrischen Außenfläche, d.h. der Scherfläche von einem in Bezug auf den Kernstrom ringförmigen, in Rotation versetzten Strömung umgeben ist. Die den Kemstrom ringförmig umgebende Strömung kann entweder im Uhrzeigersinn oder entgegen des Uhrzeigersinns um die Kernströmung rotieren. Andererseits ist es auch möglich, der Kernströmung einen Drall aufzuprägen, und in einer diese umgebenden Strömung einen Drall einzuleiten, die dem Drall der Kernströmung entgegengesetzt ist.

Die Aufgabe wird darüber hinaus durch eine Vorrichtung zur Herstellung von Polyethylen in Rohrreaktoren gelöst, bei welcher einem strömenden Fließmedium, welches Ethylen und ggf. Comonomer enthält, ein Radikalkettenstarter zugeleitet wird und das Fließmedium in einem Reaktionsrohr mit sich änderndem Strömungsquerschnitt geführt ist und in einem Mischbereich des Reaktionsrohres ein Radikalkettenstarter (Initiator) zugeführt wird und entweder Teilströme des strömenden Fließmediums unter einem bestimmten Winkel aufeinandertreffen oder im Strömungsquerschnitt drallerzeugende Elemente angeordnet sind, wobei eine Einschnürstelle der drallbehafteten Strömung ein Einspeiseelement nachgeordnet ist, welches eine außermittig angeordnete Eintrittsöffnung für einen Radikalkettenstarter umfaßt.

Der erfindungsgemäßen Vorrichtung zur Herstellung von Polyethylen wird dadurch eine enorme Mischeffektivität verliehen, dass der Radikalkettenstarter in Scherspalte einer drallbehafteten Strömung eingespeist wird, die neben einer axialen Strömungskomponente Strömungskomponenten in Umfangsrichtung aufweisen. Strömungskomponenten in Umfangsrichtung bewirken einen Impulsaustausch quer zur Strömungsrichtung und damit die Grundlage für eine effektive Mischung mehrerer Stoffe.

In bevorzugter Ausgestaltung der erfindungsgemäßen Vorrichtung ist die Austrittsöffnung an der Spitze des Einspeiseelementes, welches als strömungsgünstiger Einspeisefinger ausgestaltet ist, zu dessen Achse bevorzugt um 45° geneigt. Je nach Querschnittsdurchmesser der Öffnung sind beliebige Winkel zwischen 0° und 90° möglich. Die Drallkörper, die sich im freien Strömungsquerschnitt im Reaktionsrohr befinden, weisen an ihrem Außenumfang Drallflügel auf, die einen Ringraum des Reaktionsrohres in Umfangsrichtung jeweils um etwa 90° überstreichen. In einer alternativen Ausführungsform eines Drallkörpers lassen sich an dessen Außenumfang die Drallflügel derart anordnen, dass ein Ringraum des Reaktionsrohres in Umfangsrichtung jeweils um etwa 120° überstrichen ist.

Eine weitere Verbesserung der Mischeffektivität lässt sich dadurch erzielen, dass im Bereich der Radikalkettenstartereinspeisestelle der Strömungsdurchmesser auf etwa 70% des freien Strömungsdurchmessers reduziert ist. Dadurch lässt sich die Strömungsgeschwindigkeit um den Faktor 2 steigern, was der Mischeffektivität ebenfalls sehr zuträglich ist.

Um "Totwasser"-Gebiete zu vermeiden, erfolgt der Übergang vom freien Strömungsquerschnitt vor der Einschnürstelle in diese über einen Gesamtwinkel zwischen 20° und 40°, so dass ein abrupter Übergang vermieden wird. Besonders bevorzugt beträgt der Gesamtwinkel 30°. Zur Verbesserung des Mischverhaltens wird der Durchmesser der Einschnürstelle hinter der Einspeisestelle des Radikalkettenstarters (Initiators) über eine Mischstreckenlänge von etwa 10 bis 20 x Rohrdurchmesser (D) beibehalten. Nach dieser als Mischstrecke anzusehende Länge von 10 bis 20 x Rohrdurchmesser (D) geht die Mischstrecke unter einem Gesamtwinkel von weniger als 20° wieder in den freien Strömungsquerschnitt über. Um Entmischungsvorgänge beim Übergang vom engeren Strömungsquerschnitt in den weiteren Strömungsquerschnitt durch Abnahme der Geschwindigkeit vorzubeugen, beträgt der Gesamtwinkel bevorzugt weniger als 14°, so dass ein allmählicher Übergang vom Mischstreckenquerschnitt 0,7 x D auf D erfolgt.

Anhand der Zeichnung wird die Erfindung nachstehend näher erläutert:

Es zeigt:
- Figur 1: die Prinzipskizze einer Mischstrecke mit Mischbereich und Eindüsungsstelle eines Radikalkettenstarters (Initiators)
- Figur 2: ein drallerzeugendes Einbauelement,
- Figur 3: eine Ummantelung des Drallelementes,
- Figur 4, 4.1: einen äußeren Drallkörper,
- Figur 5, 5.1: einen inneren Drallkörper,
- Figur 6, 6.1: einen strömungsgünstig ausgebildeten Einspeisefinger,
- Figur 7: eine Eindüsungsstelle für einen Radikalkettenstarter, einem Drallerzeuger nach- und einer Mischstrecke vorgelagert,
- Figur 8: ein T-förmiges Verbindungsstück
- Figur 9, 9.1, 9,2: drallerzeugende Einbauten in Strömungsquerschnitten in 90°-, 120°-Flügelanordnung vor der Einspeisung eines Radikalkettenstarters (Initiators)

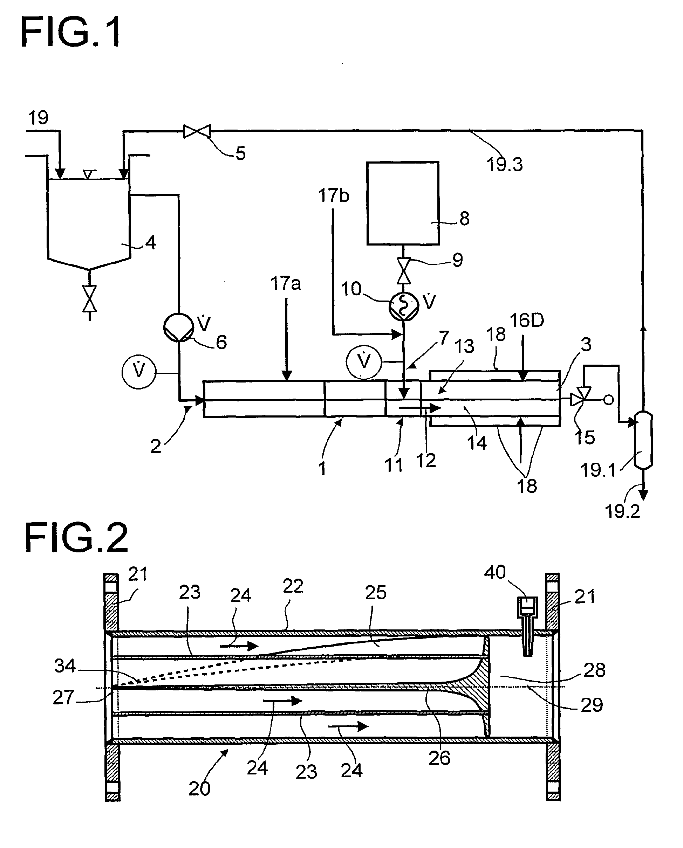

Aus der Darstellung gemäß Figur 1 geht die Prinzipskizze einer Mischstrecke mit Mischbereich und eine Einspeisestelle eines Radikalkettenstarters (Initiators) näher hervor.

Das in Figur 1 in schematischer Darstellung wiedergegebene Reaktionsrohr 1 kann Teil eines Rohrreaktors sein, in welchem mit dem erfindungsgemäß vorgeschlagenen Verfahren Polyethylen LDPE hergestellt wird. Das Reaktionsrohr 1 verfügt über einen Einlassquerschnitt 2 sowie über einen Auslassquerschnitt 3. Einlassseitig steht das Reaktionsrohr 1 über ein Leitungssystem mit einem Reaktanten zuführenden System in Verbindung. Dem Vermischungsbehälter 4 als Schwingungsdämpfer mit Puffer wird sowohl ein Frischgas enthaltender Strom als auch über den Hochdruck-Rückkreis das nicht umgesetzte Monomere zugeführt. Dem Mischbehälter kann ein Drosselelement 5 vorgeordnet sein. Stromabwärts des Vermischungsbehälters 4 ist in der Reaktantenzufuhrleitung ein Verdichter 6 vorgesehen, mit welchem die Reaktanten, d.h. das strömende Fließmedium dem Reaktionsrohr 1 komprimiert werden.

Innerhalb eines Einspeisebereiches 11 wird über eine Radikalkettenstartereinleitung 7 ein Radikalkettenstarter in das Innere des Reaktionsrohres 1 geleitet. Dazu ist ein Zuleitungssystem 7 vorgesehen, über das ein Vorrat 8 eines Radikalkettenstarters (Initiators) über ein Drosselelement 9 und über eine diesem nachgeordnete Verdichtereinrichtung 10 an der Einspeisestelle dem strömenden Fließmedium im Reaktionsrohr 1 der Radikalkettenstarter (Initiator), der die Polymerisierungsreaktion startet, zugeführt wird. An den Einspeisebereich 11 schließt sich in Strömungsrichtung 12 gesehen ein Mischbereich 13 an, der bevorzugt 10 x D bis 20 x D des Durchmessers des Reaktionsrohres 1 beträgt. Diese Mischstrecke 14 passiert das strömende fließfähige Medium, welches mit dem im Einspeisebereich 11 zugeführten Radikalkettenstarter (Initiator) auf die nachfolgend geschilderte Weise vermischt wird.

Der Strömungsquerschnitt des Reaktionsrohres 1 ist durch Bezugszeichen 16 bzw. D gekennzeichnet. An der Austrittsseite 3 des Reaktionsrohres 1 schließt sich ein Druckhalteventil 15 an, mit welchem das erhaltene Reaktionsgemisch entspannt wird. Dabei kommt es zur Phasentrennung.

In großtechnischen Anlagen zur Herstellung von LDPE dient das in der Prinzipskizze gemäß Figur 1 dargestellte Druckhalteventil 15 als Reiz- und Regelventil. Mittels dieses Ventils und eines nachgeschalteten Hochdruckabscheiders 19.1 wird nach vorheriger Kühlung im großtechnischem Maßstab ein Teil des strömenden, Ethylen enthaltenden Fließmediums wieder über einen Hochdruckkreis 19.3 der Anlage zugeführt, das erhaltene LDPE wird einem Hochdruckabscheider 19.1zugeführt, aus dem das Produkt 19.2 anschließend abgezogen wird.

In großtechnischen Anlagen ist das Reaktionsrohr 1 eines Rohrreaktors im Mischbereich 13 und in der sich an diesen anschließenden Mischstrecke 14 mit einer Wandkühlung 18 versehen. Die Wandkühlung 18 wird üblicherweise als Kühlmantel ausgeführt, welche einen Teil der bei der Polymerisierungsreaktion zwischen strömendem Fließmedium und dem Radikalkettenstarter entstehenden Reaktionswärme abführt. Der andere Teil der Reaktionswärme verbleibt im Fließmedium. Daneben können bei der Anwendung des erfindungsgemäßen Verfahrens im großtechnischen Maßstab, bei der mehrere, jeweils Reaktionsstufen bildende Reaktionsrohre 1 hintereinander in Reihe geschaltet werden können, den Mischstrecken 14 jeweils Kaltgaseinleitungen 17a, 17b zugeordnet sein. Mittels des Einmischens eines Kaltgasstromes anfangs der Mischstrecken 14 lässt sich ein weiterer Anteil der bei der Polymerisierungsreaktion entstehenden Wärme aus dem Strömungsgemisch aus strömenden Fließmedium und Radikalkettenstarter kompensieren, die umsatzrelevant umgesetzt werden kann. Weiterhin kann der Radikalkettenstarter über die Pumpe 10 in den Kaltgasstrom 17b eingeleitet werden.

Aus der Darstellung gemäß Figur 2 geht ein drallerzeugendes Einbauelement näher hervor, welches beispielsweise in das in Figur 1 schematisch wiedergegebene Reaktionsrohr 1 eingebaut sein kann.

Das Drallelement 20 gemäß der Darstellung in Figur 2 ist in einem Außenrohr 22 aufgenommen. Das Außenrohr 22 umschließt seinerseits ein Innenrohr 23. An der Außenseite des Innenrohres 23 sind - wie in Figur 2 schematisch wiedergegebendrallerzeugende Außenflügel 25 angeordnet, welche in Richtung auf den Austrittsquerschnitt 28 des Drallkörpers 20 mit abnehmender Drallflügelfläche 36 ausgebildet sind. Am Außenumfang des Innenrohres 23 können einander gegenüberliegend 2, 3, 4 oder mehrere Außendrallflügel 25 angeordnet sein. Das Innere des Innenrohres 23 kann gemäß der Ausführungsvariante in Figur 2 mit einem Drallinnenflügel 26 versehen sein. Dieser verleiht dem den inneren Querschnitt des Innenrohres 23 passierenden Teil der Strömung einen Drall zur Erzeugung einer turbulenten Strömung, während der den Ringraum zwischen Innenrohr 23 und Außenrohr 22 passierende Teil des fließfähigen Mediums durch die am Außenumfang des Innenrohres 23 angeordneten 2, 4 oder mehreren Außenflügel 25 mit einer Strömungskomponente in Umfangsrichtung versehen wird. Am Austrittsquerschnitt 28 im Bereich der Drallflügelspitzen 34 liegt demnach eine, in Bezug auf die Mittellinie 29, eine Umfangsrichtungskomponente aufweisende drallbehaftete Strömung vor.

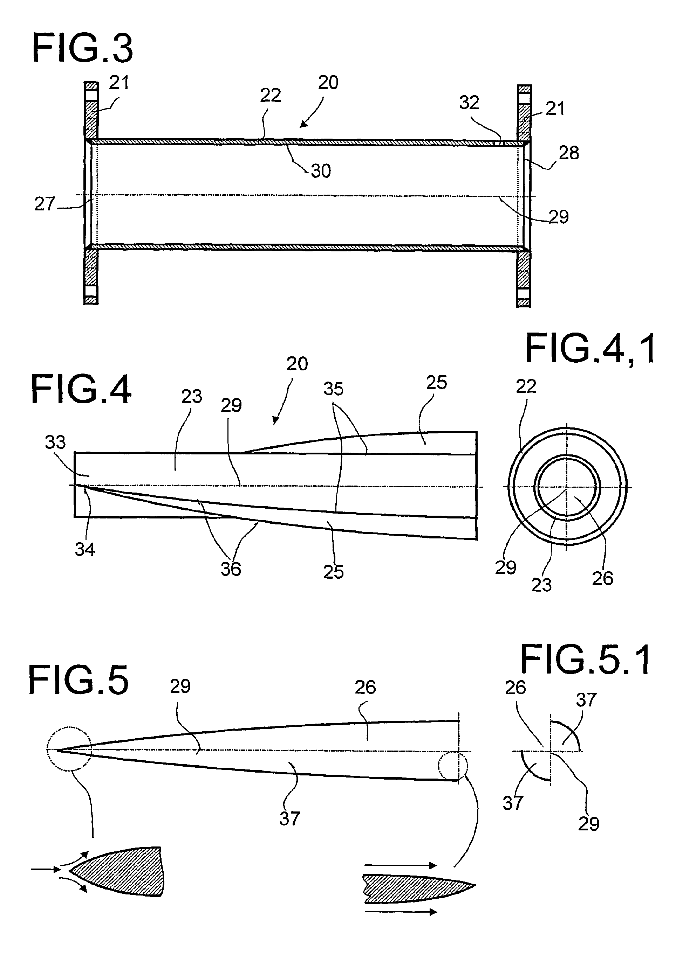

Aus der Darstellung gemäß Figur 3 geht eine Ummantelung des in Figur 2 schematisch wiedergegebenen Drallelementes näher hervor.

Die Ummantelung des Drallelementes 20 besteht im wesentlichen aus dem Außenrohr 22, welches zwischen zwei Flanschen 21 angeordnet ist. Der Eintrittsquerschnitt 27 ist in Bezug auf den Austrittsquerschnitt 28 des Drallelementes 20 koaxial zur Mittellinie 29 liegend angeordnet. Die Innenwandung 30 des Außenrohres 22 stellt die äußere Begrenzung eines Ringspaltes dar, welcher sich zwischen Außenfläche des Innenrohres 23 und dem Außenrohr 22 einstellt und welcher von den Außenflügeln 25, die am Außenumfang des Innenrohres 23 befestigt sind, schraubenlinienförmig durchzogen wird.

Aus der Darstellung gemäß Figur 4 und 4.1 geht ein mit einander gegenüberliegenden Außenflügeln an der Umfangsfläche versehenes Innenrohr 23 näher hervor.

Entlang einer Durchdringungslinie 35 sind die Außenflügel 25, von denen gemäß der Darstellung in Figur 4 zwei einander gegenüberliegend am Außenmantel des Innenrohres 23 befestigt sind, an diesen aufgenommen. Die Drallflügel 25 erstrecken sich entlang der Heftlinie 35 an der Außenfläche des Innenrohres 23 in schraubenlinienförmiger Konfiguration, wobei die hier gewählte Schraubenlinie in einer großen Steigung ausgebildet ist. An der Innenrohraußenwandung 33 können auch mehr als die in Figur 4 dargestellten zwei einander gegenüberliegend aufgenommenen Außenflügel 25 vorgesehen werden, beispielsweise vier oder auch sechs Flügel symmetrisch um 90° in Bezug auf die Mittellinie 29.

Aus der Darstellung gemäß Figur 4.1 ergibt sich eine Draufsicht auf den rückwärtigen Teil des Innenrohres 23. In der Darstellung gemäß 4.1 sind die Außenflügel 25 am Innenrohraußenmantel 33 vom Außenrohr 22 des Drallelementes 20 umgeben. Im Inneren des Innenrohres 23 ist darüber hinaus ein Drallinnenflügel 26 angeordnet, welcher sich entlang der Innenwandung des Innenrohres 23, einen Bereich von mindestens 90° überstreichend, verdreht erstreckt. Dieser Bereich kann auch bis zu 180 °C betragen. Es können auch mehrere Strömungskanäle ausgebildet werden.

Aus Figur 5 und 5.1 geht eine Seitenansicht eins Drallinnenflügels 26 sowie eine rückwärtige Ansicht desselben hervor. In Bezug auf seine Mittellinie 29 ist der Drallinnenflügel 26 mit einer verdrehten Innendrallflügelfläche 37 versehen, die, wie aus der Darstellung gemäß Figur 5.1 ersichtlich, einen 90°-Sektor der Innenfläche des Innenrohres 23 abdeckt.

Die schraubenlinienförmige Steigung der Außenflügel 25 bzw. Innenflügl 26 weisen gegensinnige Steigung auf; die Außenflügel 25 bzw. die Innenflügel 26 können in Bezug aufeinander auch mit unterschiedlicher Steigung zueinander in ein Drallelement gemäß Figur 20 eingelassen werden. Mit dieser Konfiguration kann der im Inneren des Innenrohres 23 strömenden Komponente des Fließmediums ein Drall gegen Uhrzeigersinn verliehen werden, während der zwischen der Innenrohraußenwandung 33 und der Innenfläche 30 des Außenrohres 22, d.h. im Ringraum strömenden Fluidkomponente eine Rotationskomponente im Uhrzeigersinn aufgeprägt wird. Aus den Details zu Figur 5 geht hervor, dass alle angeströmten und abströmseitig gelegenen Kanten der Drallaußen- bzw. Drallinnenflügel 25 bzw. 26 stromlinienförmig ausgebildet sind, um Wirbelbildung zu vermeiden.

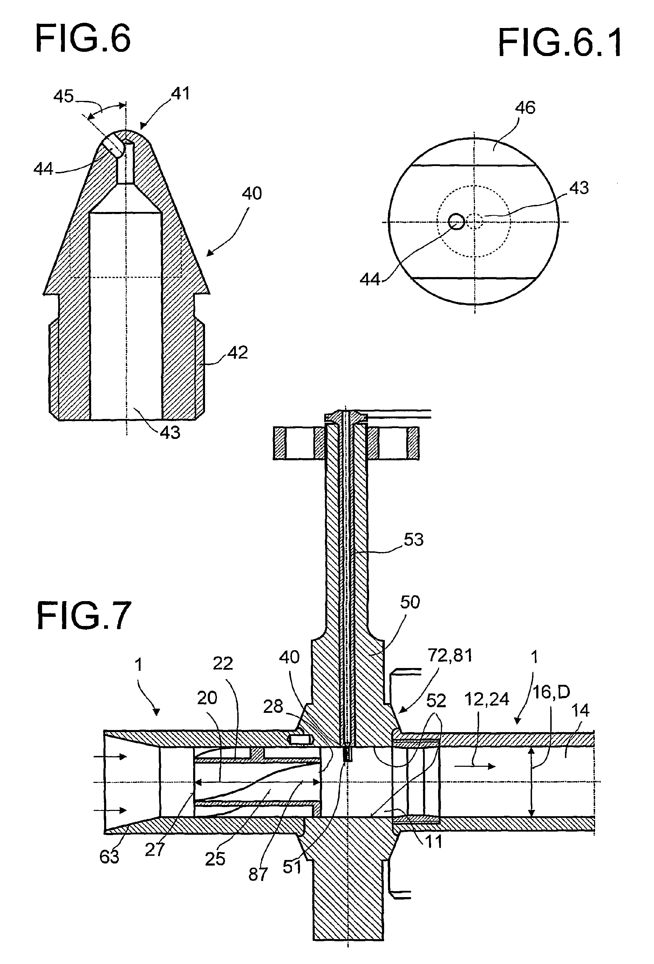

Aus den Darstellungen gemäß Figur 6 und 6.1 geht die Seitenansicht bzw. die Draufsicht eines Eintragelementes für die Radikalkettenstarter näher hervor, welches bevorzugt als strömungsgünstiger Eintragsfinger ausgestaltet ist.

Das Eintragelement und ist in die Wandung eines Reaktionsrohres 1 eingelassen ist mit einer Kegelspitze 41 versehen. Am Eintragelement 40 ist eine Bohrung 43 ausgebildet, welche über eine kegelförmig konfigurierte Querschnittsverengung in eine verengte Bohrung übergeht, an welche sich unter einem Winkel 45 eine Austrittsöffnung 44 anschließt. Die Winkellage der Austrittsöffnung 44 ist in Bezug auf die Symmetrieachse des Einspeiseelementes 40 beispielsweise um 45° geneigt, wobei ein Winkelbereich zwischen 0 und 180° möglich ist, so dass sich ein schräger Eintrag eines Radikalkettenstarters in ein strömendes Fließmedium erzielen lässt. Je nach Winkellage und Durchtrittsquerschnitt der Austrittsöffnung 44 und der Menge des Kaltgasstromes 17 lässt sich die Radikalkettenstarter-Eindringtiefe in das drallbehaftete strömende Fließmedium einstellen, so dass die Einspeisungstiefe des Radikalkettenstarters (Initiators) z.B. Peroxid in das strömende Fließmedium abhängig vom erzeugten Grad der Turbulenz einstellbar ist. An der Kegelspitze 41 des fingerförmig konfigurierten Einspeiseelementes 40 ist die Austrittsöffnung 44 des Radikalkettenstarters dabei so in Bezug auf ihre Umfangslage positioniert, dass sie bevorzugt in Scherspalte des mit einem Drall versehenen, strömenden Fließmediums eintritt. Aus den Parametern Turbulenz und Einstrahltiefe des Radikalkettenstarters ergibt sich die hohe Mischeffektivität des erfindungsgemäß vorgeschlagenen Verfahrens und der erfindungsgemäß vorgeschlagenen Einrichtung zur Herstellung von Polyethylen. Die Austrittsöffnung 44 an der Kegelspitze 41 des Einspeiseelementes 40 liegt leicht versetzt zur Mittellinie des Einspeiseelementes 40. Bei der Einspeisung ohne Kaltgasstrom 17 beträgt der Winkel vorzugsweise 0 bis 15°. Mit Kaltgasstrom 17 beträgt der Winkel vorzugsweise 45° oder kann in einem Bereich zwischen 30 und 60° gewählt werden, um eine Wandberührung des Eintrittsstromes zu vermeiden.

Der strömungsgünstig ausgebildete Einspeisefinger 40, dessen Austrittsöffnung 44 in Strömungsrichtung des strömenden Fließmediums gerichtet ist, verhindert die Ausbildung von Totwasser-Gebieten in seinem abströmseitigen Bereich. Dadurch wird in vorteilhafter Weise vermieden, dass sich durch Wirbelbildung in der Strömung Bereiche ausbilden, in denen höhere Konzentrationen des Radikalkettenstarters auftreten, so dass Zersetzungsreaktionen beginnen, die der Produktqualität des LDPE höchst abträglich sind.

Anstelle der Einleitung des Radikalkettenstarters über den Einspeisefinger 40 kann dieser auch mittels eines Trägermediums zugeführt werden. So kann der Radikalkettenstarter wie z. B. Peroxid, dem strömenden Fließmedium an der Kaltgaseinleitung 17 zugeführt werden, die dann gemäß der Darstellung in Figur 1 in den Eindüsungsbereich 11 des Reaktionsrohres zu verlegen wäre. Anstelle von Kaltgas als Trägermedium des Radikalkettenstarters kann auch direkt nach der Verdichtungsstufe 6 abgezweigtes, kaltes Ethylen als Trägergas für den Radikalkettenstarter eingesetzt werden. Wird der Radikalkettenstarter mit Kaltgas als Trägergas zugeführt, kann nach Vermischen von Kaltgas und Radikalkettenstarter in einer Mischkammer ein Eindüsen dieses vorgemischten Gemischstromes in das strömende Fließmedium an einer Einschnürstelle erfolgen, so dass bei entsprechender Auslegung der Eintragsöffnungen und Eintragswinkel an der Eintragsstelle ein hoher Impuls erzielt wird.

Aus der Darstellung gemäß Figur 7 geht eine Eindüsungsstelle für einen Radikalkettenstarter hervor, der einem drallerzeugenden Element nach- und einer Mischstrecke vorgeordnet ist.

Ein Drallelement 20 mit Drallaußenflügeln 25 ist einer in einen verengten Strömungsquerschnitt hineinragenden Öffnung 51 zugeordnet, über die ein Radikalkettenstarter in das strömende Fließmedium eingebracht wird. Die Drallaußenflügel 25 sind am Außenrohr 22 des Drallkörpers 20 aufgenommen, der in einer Länge 87 ausgebildet ist, vorzugsweise etwa 1 bis 3 x D. Mittels des Drallkörpers 20 wird ein Drall in das strömende Fließmedium eingeleitet, das nach vorheriger Passage einer Querschnittsverengung beschleunigt in den Eindüsungsbereich 11 des Radikalkettenstarters eintritt.

Die Öffnung 51 ist gemäß der Darstellung in Figur 7 an einem Rohr 53 ausgebildet, welches von einem linsenförmigen Körper 50 umschlossen ist, der zwischen zwei Abschnitten des Reaktionsrohres 1 aufgenommen ist. Bedingt durch den Vordruck des Radikalkettenstarters erfolgt eine Eindüsung in das strömende Fließmedium, ohne die Innenwandung 52 im Mischbereich 11 des Reaktionsrohres zu berühren. Nach Eindüsung des Radikalkettenstarters in das in Strömungsrichtung 12, 24 strömende Fließmedium tritt das reagierende Gemisch in eine Mischstrecke 14 ein, an welche sich eine hier nicht dargestellte Strömungsquerschnittserweiterung anschließen kann.

Anstelle einer reinen Einspeisungsstelle für einen Radikalkettenstarter 72, 81 kann dieser in der Darstellung gemäß Figur 7 auch mittels eines Trägermediums, sei es Kaltgas 17 oder ein vor der Verdichtungsstufe 6 (Figur 1) abgezweigter Ethylenstrom sein. Durch die fingerförmige Ausbildung des Eintragselementes 40 bilden sich stromab im Mischbereich 11 keine Totwasser-Gebiete aus, so dass Strömungsgebiete mit höherer Radikalkettenstarterkonzentration nicht auftreten.

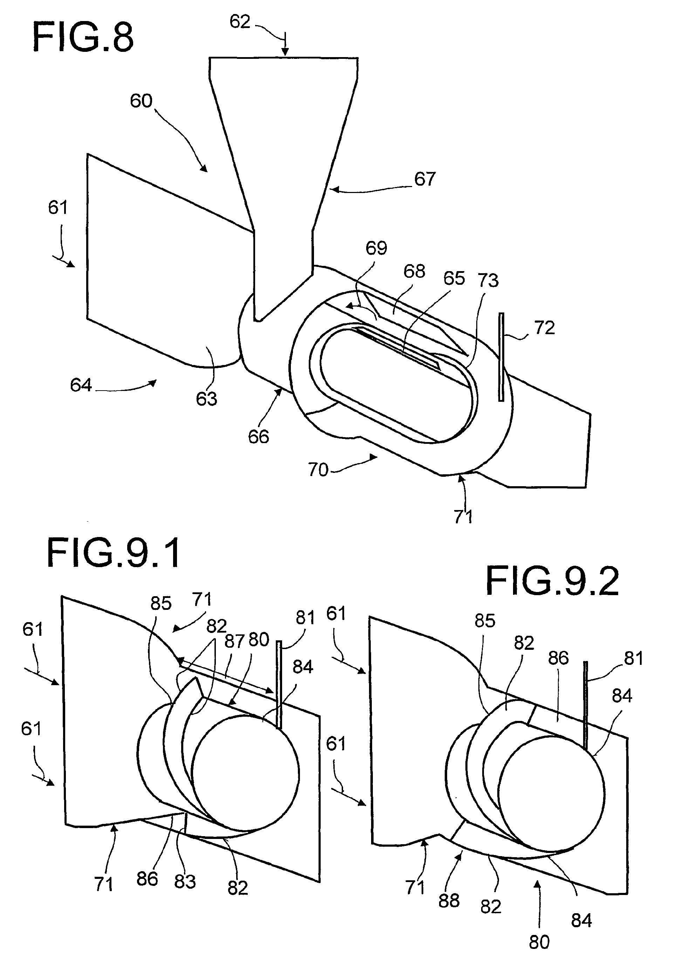

Aus Figur 8 geht ein T-förmiges Verbindungsstück an einem Reaktionsrohr näher hervor, an welchem zwei Reaktantenströme miteinander vermischt werden.

Am in Figur 8 dargestellten Reaktionsrohr strömt ein erster Teilstrom 61 und ein zweiter Teilstrom 62 unter einem Winkel 66 auf eine Eintragsstelle an einem Reaktionsrohr zu. Der erste Teilstrom 61 des als strömendes Fließmedium vorliegenden Rektanden passiert eine erste Querschnittsverengung 63, welcher am Reaktionsrohr durch eine konisch verlaufende Verengung 64 ausgebildet ist. Um einen Winkel von 90° dazu geneigt, strömt der zweite Teilstrom 62 des Reaktanten in vertikaler Richtung hier von oben kommend, eine konische Sektion 67 passierend, auf das Reaktionsrohr zu. Beide Teilströme der als strömendes Fließmedium vorliegenden Reaktanten erfahren bei der Passage der jeweiligen Querschnittsverengung 63 bzw. 67 eine Erhöhung der Strömungsgeschwindigkeit, bevor der zweite Reaktantenstrom eine 90° betragende Umlenkung 66 erfährt und demzufolge eine Tangentialströmung 69 erzeugt. Die Tangentialströmung 69 verläuft in Bezug auf die Fließrichtung des ersten Teilstromes 61 in Umfangsrichtung, innerhalb eines Ringraumes 68 im Reaktionsrohr 1. Die Teilströme 61, 62 des Reaktanten erfahren bereits durch die unter einem Winkel von 90° erfolgende Zusammenführung eine Vermischung durch Einleitung einer tangentialen Strömungskomponente 69 in das entlang des Reaktionsrohres strömende Fluid.

Das den Ringraum 68 im Reaktionsrohr aus dem Teilstrom 62 bestehende Fluid strömt im Ringraum 68 zwischen Innenwandung des Reaktionsrohres und Außenwandung eines Einsatzelementes 65 und wir am Ende des Einsatzelementes 65 mit Teilstrom 61 zusammengeführt. Der vereinigte Massenstrom passiert die Einspeisestelle 72 eines Radikalkettenstarters (Initiator), z.B. Peroxid und eine weitere Querschnittsverengung 71. Die Querschnittsverengung 71 ist bevorzugt derart gestaltet, dass der freie Strömungsquerschnitt an der Einspeisestelle 72 des Radikalkettenstarters (Initiators), wie beispielsweise Peroxid vorzugsweise 0,7 x D (freier Rohrdurchmesser) beträgt. Dadurch wird dem drallbehafteten, beschleunigten und zusammengeführten Massenstrom 70 aus den Teilströmen 61 bzw. 62 des Reaktanten eine weitere Geschwindigkeitserhöhung aufgeprägt. Ist die Einspeisestelle 72 des Radikalkettenstarters an der Rohrwandung als ein fingerförmiges, strömungsgünstiges Einspeiseelement 40 gemäß der Darstellungen aus Figur 6 und 6.1 beschaffen, so wird ein Radikalkettenstarter in die drallbehaftete, mit einer tangentialen Strömungskomponente 69 versehene Strömung bevorzugt an Scherspalten eingetragen, so dass eine rasche und effektive Verwirbelung des zusammengeführten Reaktantenstromes erzielt wird. Der gesamte Winkel, unter dem die Querschnittsverengung 71 vom ursprünglichen Strömungsquerschnitt D auf 0,7 x D übergeht liegt im Bereich zwischen 20° und 40°, besonders bevorzugt 30° Gesaxntwinkel.

Die sich an der Einspeisestelle 72 des Radikalkettenstarters anschließende Mischstrecke liegt bevorzugt in einer Länge von 10 x D bis 20 x D Rohrdurchmesser vor, kann aber auch 100 x D betragen- , bevor nach der Mischstrecke ein Übergang auf den Originalströmungsdurchmesser D erfolgt. Der Übergang vom Mischstreckendurchmesser 0,7 x D auf D erfolgt bevorzugt ähnlich einer Diffusorausgestaltung in einem Gesamtwinkel zwischen 10 und 20°, besonders bevorzugt unter einem Gesamtwinkel, der kleiner als 14° liegt.

Eine andere Ausführungsvariante der erfindungsgemäß vorgeschlagenen Vorrichtung zur Herstellung von Polyethylen ist in den Figuren 9.1 bzw. 9.2 wiedergegeben.

In diesen Ausführungsvarianten wird der Reaktantenstrom 61 als einziger Strom einer Querschnittsverengung 41 zugeführt. Eine Aufteilung in unterschiedlich zueinander gewinkelt verlaufende Eintrittstellen von Teilströmen 61, 62 ist in dieser Ausführungsvariante nicht vorgesehen.

Die Einschnürstelle 71 geht analog zur Darstellung gemäß Figur 8 unter einem Gesamtwinkel von 30° in eine Querschnittsverengung im freien Strömungsquerschnitt über. Nach Passage der Einschnürstelle 71 liegt der Strömungsquerschnitt im Reaktionsrohr von 0,7 x D vor, welcher über die sich an die Radikalkettenstartereinspeisungsstelle 81 anschließende Mischstrecke beibehalten wird. Die Länge der Mischstrecke beträgt bevorzugt 10 x D bis 20 x D des ursprünglichen Reaktionsrohrdurchmessers D.

Nach der Einschnürstelle 71, an der sich eine Strömungsgeschwindigkeitserhöhung bis zum Faktor 2 einstellt, sind in den freien Strömungsquerschnitt des Reaktionsrohres Drallkörper 80 eingelassen. Die Drallkörper 80 befinden sich in Strömungsrichtung 24 gesehen vor der Einspeisestelle 81 eines Radikalkettenstarters (Initiators) wie zum Beispiel Peroxid. Am Außenumfang der Drallkörper 80 gemäß der Darstellung aus Figur 9.1 befinden sich zwar hier aus der Darstellung gemäß Figur 9 zwei Drallflügel 82. In dieser Konfiguration erstrecken sich die Drallflügel in der Außenumfangsfläche des Drallkörpers 80 um jeweils 90°, so dass dem mit erhöhter Geschwindigkeit eintretenden Fluidmassenstrom eine Rotation aufgeprägt wird. Die Enden der an der Außenfläche der Drallkörper 80 ausgebildeten Drallflügel 82 liegen an der Innenseite des Reaktionsrohres 1 an, welches die Drallkörper 80 ummantelt. Die an der Außenmantelfläche 84 der Drallkörper 80 ausgebildeten Flügelelemente 82 bilden mit ihrer Flügelkante 85 einen Dichtspalt, so dass das das Drallelement 80 passierende Fluid durch den Ringraum zwischen Außenfläche 84 und Innenwandung des Reaktionsrohres gezwungen wird, so dass die Erzeugung einer Strömungskomponente in Umfangsrichtung bei Passage des Drallkörpers 80 gewährleistet ist.

Eine alternative Ausgestaltungsmöglichkeit besteht darin - wie in der Darstellung gemäß Figur 9.2 schematisch wiedergegeben -, einen Drallkörper 80 in den sich an die Einschnürstelle 71 anschließenden Bereich des Reaktionsrohres einzulassen, an dessen Außenfläche 84 Drallflügel 82 aufgenommen sind, die sich jedoch um 120° an der Umfangsfläche 84 des Drallelementes 80 erstrecken, wie durch Bezugszeichen 88 angedeutet werden soll. Auch gemäß dieser erfindungsgemäßen Ausgestaltungsvariante wird der durch einen Radikalkettenstarter an der Eintragstelle 81 zu beaufschlagenden Reaktantenströmung ein Drall aufgeprägt, durch welchen die Mischungsverhältnisse stromab der Eintragstelle 31 des Radikalkettenstarters wie zum Beispiel Peroxid wesentlich verbessert werden. Der Grad der Turbulenz kann einerseits durch die Steigung der Drallflügel 82 sowie durch die Länge 87 der Drallelemente beeinflußt werden. Andererseits lässt sich die erzielbare Mischeffektivität durch die Auslegung der Einschnürstelle 71 durch Beschleunigung des Reaktantenmassenstromes optimieren.

Maßgebende Parameter sind neben den Vermischungsparametern die Länge der Vermischungszone und die Beschleunigung der Strömungsgeschwindigkeit des strömenden Fließmediums.

Den Ausführungsvarianten gemäß Figur 8 und Figur 9.1 und 9.2 ist sämtlich gemeinsam, dass die Drallerzeugung einerseits bereits bei der Zufuhr der Teilströme 61 bzw. 62 des Reaktanten erfolgen kann, andererseits eine drallbehaftete Strömung durch eine gewinkelte Zusammenführung der Teilströme erzielbar ist und andererseits eine Dralleinleitung in das mit einem Radikalkettenstarter zu beaufschlagende Fluid mittels dem Strömungsquerschnitt aufgenommener Drallkörper 20, 80 realisiert werden kann. Die Zufuhr des Radikalkettenstarters kann sowohl ohne als auch mit Kaltethylen erfolgen.

Die erfindungsgemäßen Einbauten zur Drallerzeugung können nach geringfügigen Modifikationen auch im Bereich existierenden Anlagen nachgerüstet werden, um deren Wirkungsgrad zu steigern.

### Bezugszeichenliste

- 1: Reaktionsrohr
- 2: Einlaß
- 3: Auslaß
- 4: Vermischungsbehälter
- 5: Drosselelement
- 6: Verdichter
- 7: Radikalkettenstarter-Einleitung
- 8: Initiatorvorrat
- 9: Drosselelement
- 10: Verdichter
- 11: Eindüsungsbereich
- 12: Strömungsrichtung
- 13: Mischbereich
- 14: Mischstrecke
- 15: Ventil
- 16: Strömungsquerschnitt
- 17a: Kaltgaseinleitung
- 17b: Kaltgaseinleitung
- 18: Wandkühlung
- 19: Frischgaszufuhr
- 19.1: Abscheider
- 19.2: Produkt
- 19.3: Hochdruckrücklauf
- 20: Drallkörper
- 21: Flansch
- 22: Außenrohr
- 23: Innenrohr
- 24: Strömungsrichtung
- 25: Drallaußenflügel
- 26: Drallinnenflügel
- 27: Eintrittsquerschnitt
- 28: Austrittsquerschnitt
- 69: Tangentialströmung
- 29: Mittellinie
- 30: Innenwandung
- 31: Außenwandung
- 32:
- 33: Innenrohraußenwandung
- 34: Drallflügelspitze
- 35: Durchdringungslinie
- 36:
- 37: Innendrallflügelfäche
- 40: Einspeisefinger
- 41: Kegelspitze
- 42:
- 43: Bohrung
- 44: Austrittsöffnung
- 45: Winkellage

- 50: Eindüsungslinse
- 51: Öffnung
- 52: Innenwandung
- 53: Rohr

- 60: T-Verbindung
- 61: erster Strom
- 62: zweiter Strom
- 63: Querschnittsverengung
- 64: konische Sektion
- 65: Einsatzelement
- 66: 90°-Umlenkung
- 67: konische Sektion
- 68: Ringraum

- 70: Vereinigungsstelle 61, 62
- 71: Querschnittsverengung für vereinigten Strom
- 72: Radikalkettenstartereinspeisung
- 73: Scherspalt
- 80: Drallelement
- 81: Radikalkettenstartereinspeisung
- 82: Drallflügel
- 83: Drallflügelerstreckung 90°
- 84: Außenfläche Drallkörper
- 85: Flügelkante
- 86: Ringraum
- 87: Drallkörperlänge
- 88: Drallflügelerstreckung 120 °

## Patentansprüche

1. Verfahren zum Herstellen von Polyethylen in Rohrreaktoren und/oder in Kombination mit Autoklaven, bei dem einem strömenden Fließmedium, Ethylen und ggf. Comonomere enthaltend, ein Radikalkettenstarter zugeleitet wird, mit mindestens nachfolgend aufgeführten Verfahrensschritten:
- Erzeugen von Drall durch Mischung zweier zu mischender Ströme (61, 62) unter einem Winkel (66) oder Erzeugen von Drall in einem Strom (61) mittels eines Drallelementes (20);
- Vorsehen einer Querschnittsverengung (63, 67; 71) mit Einlaufzone vor der Einspeisestelle (72, 81) eines Radikalkettenstarters im Reaktionsrohr (1);
- Einleiten des Radikalkettenstarters durch eine außermittige Austrittsöffnung (44) in das strömende, drallbehaftete Fließmedium (61, 62; 70) und
- Nachschalten einer Vermischungszone und einer Querschnittserweiterung mit Auslauf.

2. Verfahren nach Anspruch 1, **dadurch gekennzeichnet, dass** mehrere Reaktionsrohre (1) in Reihe geschaltet sind, deren Mischstrecken (14) jeweils eine Hauptkaltgaseinleitung (17a) zugeordnet ist.

3. Verfahren nach Anspruch 1 oder 2, **dadurch gekennzeichnet, dass** die Reaktionswärme mittels einer Wandungskühlung (18) und der Einleitung von Kaltgas (17) abgeführt wird.

4. Verfahren nach einem oder mehreren der Ansprüche 1 bis 3, **dadurch gekennzeichnet, dass** der Radikalkettenstarter mittels eines Trägergases, Kaltgashauptstrom (17a), oder eines vor der Verdichtung abgezweigten kalten Nebenstromes des strömenden Fließmediums einem Eindüsungsbereich (11) zugeführt wird.

5. Verfahren nach einem oder mehreren der Ansprüche 1 bis 4, **dadurch gekennzeichnet, dass** die Einspeisestelle (72, 81) des Radikalkettenstarters stromab vom Ort der Dralleinleitung in das strömende Fließmedium (61, 62) liegt.

6. Verfahren nach einem oder mehreren der Ansprüche 1 bis 5, **dadurch gekennzeichnet, dass** durch die Geometrie der Austrittsöffnung (44) am Einspeisefinger (40) die Einspeisetiefe des Radikalkettenstarters in das strömende Fließmedium (61, 62; 70) beeinflussbar ist.

7. Verfahren nach einem oder mehreren der Ansprüche 1 bis 6, **dadurch gekennzeichnet, dass** die Einspeiseeinrichtungen von strömendem Fließmedium (61, 62) um einen Winkel (66) zwischen 45 und 135°, vorzugsweise jedoch 90° zueinander orientiert sind.

8. Verfahren nach einem oder mehreren der Ansprüche 1 bis 7, **dadurch gekennzeichnet, dass** die strömenden Fließmedien (61, 62) vor ihrer Zusammenführung jeweils Querschnittsverengungen (63, 67) passieren.

9. Verfahren nach einem oder mehreren der Ansprüche 1 bis 8, **dadurch gekennzeichnet, dass** das drallbehaftete, strömende Fließmedium (61, 62, 70) vor der Einspeisestelle (72) des Radikalkettenstarters eine sich an einen Ringraum (68) anschließende Querschnittsverengung (71) passiert.

10. Verfahren nach einem oder mehreren der Ansprüche1 bis 9, **dadurch gekennzeichnet, dass** die Einspeisung des Radikalkettenstarters an der Einspeisestelle (72) in einen Scherspalt (73) des drallbehafteten fließenden Mediums (70) erfolgt.

11. Verfahren nach einem oder mehreren der Ansprüche 1 bis 10, **dadurch gekennzeichnet, dass** der Drall im strömenden Fließmedium (61, 62, 70) durch im Strömungsquerschnitt (27, 28) vor der Einspeisestelle (72, 80) angeordnete Drallkörper (20, 80) erzeugt wird.

12. Vorrichtung zum Herstellen von Polyethylen in Rohrreaktoren, bei dem einem strömenden Fließmedium (61, 62), das Ethylen enthält und ggf. Comonomer, ein Radikalkettenstarter zugeleitet wird und das Fließmedium (61, 62) ein Reaktionsrohr (1) mit sich änderndem Strömungsquerschnitt (27) passiert und in einem Mischbereich (13) ein Radikalkettenstarter zugeführt wird, **dadurch gekennzeichnet, dass** Teilströme (61, 62) des strömenden Fließmediums unter einem Winkel (66) aufeinandertreffen oder im Strömungsquerschnitt (27, 28) Drallkörper (20, 80) angeordnet sind und einer Einschnürstelle (71) der drallbehafteten Strömung (70) ein Einspeisefinger (40) nachgeordnet ist, welcher eine außermittig angeordnete Austrittsöffnung (44) für einen Radikalkettenstarter enthält.

13. Vorrichtung nach Anspruch 12, **dadurch gekennzeichnet, dass** die Austrittsöffnung (44) an der Spitze (41) des Einspeisefingers (40) zu dessen Achse in einem Winkel zwischen 5 und 80°, vorzugsweise um 45°, geneigt angeordnet ist.

14. Vorrichtung nach Anspruch 12 oder 13, **dadurch gekennzeichnet, dass** die Drallkörper (20, 80) am Außenumfang angeordnete Drallflügel (25, 82) umfassen, die einen Ringraum (68) des Reaktionsrohres (1) in Umfangsrichtung jeweils zwischen 45 und 360°, vorzugsweise um 90°, überstreichen.

15. Vorrichtung nach Anspruch 12 oder 13, **dadurch gekennzeichnet, dass** die Drallkörper (20, 80) am Außenumfang angeordnete Drallflügel (25, 82) umfassen, die einen Ringraum (68) des Reaktionsrohres (1) in Umfangsrichtung zwischen 45 und 360°, vorzugsweise um 120°, überstreichen.

16. Vorrichtung nach einem oder mehreren der Ansprüche 12 bis 15, **dadurch gekennzeichnet, dass** der Durchmesser der Einschnürstelle (71) etwa 0,2 bis 0,95, vorzugsweise 0,7 x D des freien Strömungsquerschnittes (27, 28) beträgt.

17. Vorrichtung nach einem oder mehreren der Ansprüche 12 bis 16, **dadurch gekennzeichnet, dass** der freie Strömungsquerschnitt (27) vor der Einschnürstelle (71) über einen Gesamtwinkel zwischen 10° und 70° in die Einschnürstelle (71) übergeht.

18. Vorrichtung nach Anspruch 17, **dadurch gekennzeichnet, dass** der Gesamtwinkel besonders bevorzugt 30° beträgt.

19. Vorrichtung nach einem oder mehreren der Ansprüche 12 bis 18, **dadurch gekennzeichnet, dass** der Durchmesser 0,7 x D der Einschnürstelle (71) hinter der Einspeisestelle (71, 82) des Radikalkettenstarters über eine Mischstreckenlänge (13) von 10 x D bis 100 x D unverändert bleibt.

20. Vorrichtung nach einem oder mehreren der Ansprüche 12 bis 19, **dadurch gekennzeichnet, dass** die Mischstrecke (13) nach 10 x D bis 100 x D unter einem Gesamtwinkel von weniger als 20°, vorzugsweise weniger als 14°, in den freien Strömungsquerschnittsdurchmesser D übergeht.

## Claims

1. A process for preparing polyethylene in tube reactors and/or in combination with autoclaves, in which a free-radical initiator is introduced into a flowing medium comprising ethylene and possibly comonomers and which comprises at least the following steps:
- generation of rotation by mixing two streams to be mixed (61, 62) at an angle (66) or generation of rotation in a stream (61) by means of a swirl element (20),
- provision of a cross-sectional constriction (63, 67; 71) with an inlet zone upstream of the feed point (72, 81) for a free-radical initiator into the reaction tube (1),
- introduction of the free-radical initiator through an off-center outlet orifice (44) into the flowing, rotating medium (61, 62; 70) and
- provision in a downstream direction of a mixing zone and a cross-sectional widening with an outlet.

2. A process as claimed in claim 1, wherein a plurality of reaction tubes (1) are connected in series and their mixing sections (14) are each assigned a main cold gas inlet line (17a).

3. A process as claimed in claim 1 or 2, wherein the heat of reaction is removed by means of wall cooling (18) and the introduction of cold gas (17).

4. A process as claimed in one or more of claims 1 to 3, wherein the free-radical initiator is fed to an injection region (11) by means of a carrier gas, cold gas main stream (17a) or cold sub stream of the flowing medium which has been branched off before compression.

5. A process as claimed in one or more of claims 1 to 4, wherein the feed point (72, 81) for the free-radical initiator is located downstream of the point where rotation is imparted to the flowing medium (61, 62).

6. A process as claimed in one or more of claims 1 to 5, wherein the depth to which the free-radical initiator is injected into the flowing medium (61, 62; 70) can be influenced by the geometry of the outlet orifice (44) on the introduction finger (40).

7. A process as claimed in one or more of claims 1 to 6, wherein the feed facilities for the flowing medium (61, 62) are at an angle (66) to one another of from 45 to 135°, but preferably 90°.

8. A process as claimed in one or more of claims 1 to 7, wherein the flowing media (61, 62) each pass through cross-sectional constrictions (63, 67) before they are combined.

9. A process as claimed in one or more of claims 1 to 8, wherein the rotating, flowing medium (61, 62, 70) passes through a cross-sectional constriction (71) downstream of an annular space (68) before reaching the feed point (72) for the free-radical initiator.

10. A process as claimed in one or more of claims 1 to 9, wherein the free-radical initiator is fed into a shear gap (73) of the rotating flowing medium (70) at the feed point (72).

11. A process as claimed in one or more of claims 1 to 10, wherein the rotation in the flowing medium (61, 62, 70) is generated by means of swirl elements (20, 80) located in the flow cross section (27, 28) upstream of the feed point (72, 80).

12. An apparatus for preparing polyethylene in tube reactors, in which a free-radical initiator is fed into a flowing ethylene- and possibly comonomer-containing medium (61, 62) and the flowing medium (61, 62) passes through a reaction tube (1) having a changing flow cross section (27) and a free-radical initiator is introduced in a mixing region (13), wherein substreams (61, 62) of the flowing medium impinge on one another at an angle (66) or swirl elements (20, 80) are located in the flow cross section (27, 28) and a feed finger (40) having an off-center outlet orifice (44) for a free-radical initiator is located downstream of a constriction (71) in the rotating flow (70).

13. An apparatus as claimed in claim 12, wherein the outlet orifice (44) at the tip (41) of the feed finger (40) is inclined to the axis of the latter at an angle of from 5 to 80°, preferably 45°.

14. An apparatus as claimed in claim 12 or 13, wherein the swirl elements (20, 80) are provided on their outer circumference with swirl blades (25, 82) which each extend over from 45 to 360°, preferably 90°, in the circumferential direction in an annular space (68) of the reaction tube (1).

15. An apparatus as claimed in claim 12 or 13, wherein the swirl elements (20, 80) are provided on their outer circumference with swirl blades (25, 82) which each extend over from 45 to 360°, preferably 120°, in the circumferential direction in an annular space (68) of the reaction tube (1).

16. An apparatus as claimed in one or more of claims 12 to 15, wherein the diameter of the constriction (71) is from about 0.2 to 0.95 times, preferably 0.7 times, the diameter D of the free flow cross section (27, 28).

17. An apparatus as claimed in one or more of claims 12 to 16, wherein the free flow cross section (27) upstream of the constriction (71) passes over at a total angle of from 10° to 70° into the constriction (71).

18. An apparatus as claimed in claim 17, wherein the total angle is particularly preferably 30°.

19. An apparatus as claimed in one or more of claims 12 to 18, wherein the diameter 0.7 x D of the constriction (71) downstream of the feed point (71, 82) for the free-radical initiator remains unchanged over a mixing section length (13) of from 10 x D to 100 x D.

20. An apparatus as claimed in one or more of claims 12 to 19, wherein the mixing section (13) passes over after from 10 x D to 100 x D into the free flow cross section diameter D at a total angle of less than 20°, preferably less than 14°.

## Revendications

1. Procédé de préparation de polyéthylène dans un réacteur tubulaire et/ou en combinaison avec un autoclave, dans lequel on introduit dans un milieu fluide s'écoulant, contenant de l'éthylène et le cas échéant, des comonomères, un initiateur de chaîne radicalaire, présentant au moins les étapes suivantes de procédé :
- production d'un tourbillon par mélange de deux courants à mélanger (61, 62) selon un angle (66) ou production d'un tourbillon dans un courant (61) à l'aide d'un élément de tourbillon (20) ;
- mise en place d'un rétrécissement de section (63, 67 ; 71) avec zone d'entrée avant le site d'injection (72, 81) d'un initiateur de chaîne radicalaire dans le tube de réaction (1) ;
- introduction de l'initiateur de chaîne radicalaire par une ouverture de sortie (44) excentrée dans le milieu fluide s'écoulant, tourbillonnant (61, 62 ; 70), et
- disposition à la suite d'une zone de mélange et d'un élargissement de section avec sortie.

2. Procédé selon la revendication 1, **caractérisé en ce que** plusieurs tubes de réaction (1) sont disposés en série, leurs sections de mélange (14) étant respectivement associés à une conduite principale de gaz froid (17a).

3. Procédé selon la revendication 1 ou 2, **caractérisé en ce que** la chaleur de réaction est éliminée par un refroidissement de paroi (18) et la conduite de gaz froid (17).

4. Procédé selon l'une ou plusieurs des revendications 1 à 3, **caractérisé en ce que** l'initiateur de chaîne radicalaire est amené à l'aide d'un gaz porteur, du courant principal de gaz froid (17a), ou d'un courant secondaire froid dérivé, avant la condensation, du milieu fluide s'écoulant, dans une zone d'injection (11).

5. Procédé selon l'une ou plusieurs des revendications 1 à 4, **caractérisé en ce que** le site d'injection (72, 81) de l'initiateur de chaîne radicalaire se trouve en amont du site de déclenchement de tourbillon dans le milieu fluide s'écoulant (61, 62).

6. Procédé selon l'une ou plusieurs des revendications 1 à 5, **caractérisé en ce que** la profondeur d'injection de l'initiateur de chaîne radicalaire dans le milieu fluide s'écoulant (61, 62 ; 70) peut être influencée par la géométrie de l'ouverture de sortie (44) sur le doigt d'injection (40).

7. Procédé selon l'une ou plusieurs des revendications 1 à 6, **caractérisé en ce que** les dispositifs d'injection du milieu fluide s'écoulant (61, 62) sont orientés avec un angle (66) allant de 45 à 135°, de préférence de 90°, l'un par rapport à l'autre.

8. Procédé selon l'une ou plusieurs des revendications 1 à 7, **caractérisé en ce que** les milieux fluides s'écoulant (61, 62) passent respectivement par des rétrécissements de section (63,67) avant leur rassemblement.

9. Procédé selon l'une ou plusieurs des revendications 1 à 8, **caractérisé en ce que** le milieu fluide s'écoulant, tourbillonnant (61, 62 ; 70) passe par un rétrécissement de section (71) suivant un espace annulaire (68), avant le site d'injection (72) de l'initiateur de chaîne radicalaire.

10. Procédé selon l'une ou plusieurs des revendications 1 à 9, **caractérisé en ce que** l'injection de l'initiateur de chaîne radicalaire est réalisée sur le site d'injection (72) dans une fente de cisaillement (73) du milieu s'écoulant, tourbillonnant (70).

11. Procédé selon l'une ou plusieurs des revendications 1 à 10, **caractérisé en ce que** le tourbillon dans le milieu fluide s'écoulant (61, 62 ; 70) est produit par un corps de tourbillon (20, 80) disposé dans la section d'écoulement (27, 28) avant le site d'injection (72, 80).

12. Dispositif de préparation de polyéthylène dans des réacteurs tubulaires, dans lequel on introduit, dans un milieu fluide s'écoulant (61, 62), qui contient l'éthylène et le cas échéant, des comonomères, un initiateur de chaîne radicalaire, le milieu fluide (61, 62) passent dans un tube de réaction (1) avec une section variable d'écoulement (27) et dans une zone de mélange (13), étant introduit l'initiateur de chaîne radicalaire, **caractérisé en ce que** les courants partiels (61, 62) du milieu fluide s'écoulant se rencontrent selon un angle (66) ou des corps de tourbillon (20, 80) sont disposés dans la section d'écoulement (27, 28) et un site de rétrécissement (71) du courant tourbillonnant (70) est disposé après un doigt d'injection (40), qui contient une ouverture de sortie (44) excentrée pour un initiateur de chaîne radicalaire.

13. Dispositif selon la revendication 12, **caractérisé en ce que** l'ouverture de sortie (44) est disposée sur le pointe (41) du doigt d'injection (40) selon un angle de 5 à 80°, de préférence de 45° par rapport à son axe.

14. Dispositif selon la revendication 12 ou 13, **caractérisé en ce que** le corps de tourbillon (20, 80) comprend une aile de tourbillon (25, 82) disposée sur la périphérie extérieure, qui balaye un espace annulaire (68) du tube de réaction (1) en direction de la périphérie, respectivement entre 45 et 360°, de préférence 90°.

15. Dispositif selon la revendication 12 ou 13, **caractérisé en ce que** le corps de tourbillon (20, 80) comprend une aile de tourbillon (25, 82) disposée sur la périphérie extérieure, qui balaye un espace annulaire (68) du tube de réaction (1) en direction de la périphérie, entre 45 et 360°, de préférence 120°.

16. Dispositif selon l'une ou plusieurs des revendications 12 à 15, **caractérisé en ce que** le diamètre du site de rétrécissement (71) se situe dans l'intervalle allant d'environ 0,2 à 0,95, de préférence 0,7 x D de la section d'écoulement libre (27, 28).

17. Dispositif selon l'une ou plusieurs des revendications 12 à 16, **caractérisé en ce que** la section d'écoulement libre (27) avant le site de rétrécissement (71) se convertit en site de rétrécissement (71) par un angle total allant de 10° à 70.

18. Dispositif selon la revendication 17, **caractérisé en ce que** l'angle total se situe de manière particulièrement préférée, à 30°.

19. Dispositif selon l'une ou plusieurs des revendications 12 à 18, **caractérisé en ce que** le diamètre 0,7 x D du site de rétrécissement (71) après le site d'injection (71, 82) de l'initiateur de chaîne radicalaire reste inchangé sur une longueur de section de mélange (13) de 10 x D à 100 x D.

20. Dispositif selon l'une ou plusieurs des revendications 12 à 19, **caractérisé en ce que** la section de mélange (13) après 10 x D à 100 x D, se convertit en diamètre de section d'écoulement libre D avec un angle total de moins de 20°, de préférence moins de 14°.
